# EUROPÄISCHE PATENTANMELDUNG

(11) **EP 4 074 230 A2**
(43) Veröffentlichungstag der Anmeldung: **19.10.2022**
(21) Anmeldenummer: 22166612.6
(22) Anmeldetag: 05.04.2022
(51) Int. Cl.: A47J 37/07

(54) **ZUSATZBRENNER FÜR EINEN GRILL**

(30) Priorität: 14.04.2021 CH 3822021; 14.04.2021 CH 3832021
(71) Anmelder: Outdoorchef AG, 8050 Zürich (CH)
(72) Erfinder: Pfeifer, Stefan, 5322 Koblenz (CH); Bittel, André, 5644 Auw (CH)
(74) Vertreter: Frommhold, Joachim

(57) **Zusammenfassung**

Die Erfindung betrifft einen Zusatzbrenner für einen Grill sowie einen dafür geeigneten Grill, insbesondere einen Gasgrill zum Grillen, Garen oder Backen von Speisen auf einem Grillrost oder dergleichen, insbesondere zur Verwendung im Freien, an dem der Zusatzbrenner und/oder ein Arbeitstisch anordenbar ist.

Der Grill soll eine bessere Performance beim Grillen ermöglichen und insbesondere auch direktes und indirektes Grillen gleichzeitig und energiesparend.

Hierzu umfasst der Grill eine Brennkammer (4), in der eine Brenneranordnung enthalten ist, wobei die Brennkammer (4) mit einer klappbaren Haube (2) versehen ist, die im geschlossenen Zustand den Grillrost abdeckt, wobei die Brennkammer 4 ist auf einem Unterbau (3) aufsitzend angeordnet ist, und weiterhin als Arbeitsebene eine ebene Basis (5). An der Basis (5) ist mindestens ein Zusatzbrenner (12, 22) und/oder mindestens ein Ausziehtisch (6) anordenbar, wobei der Ausziehtisch (6) und/oder der Zusatzbrenner (12, 22) Führungsschienen (8) aufweist, die in Führungsbahnen (8) der Basis (5), insbesondere in horizontaler Richtung, geführt sind.

## Beschreibung

Die Erfindung betrifft einen Zusatzbrenner für einen Grill sowie einen dafür geeigneten Grill, insbesondere einen Gasgrill zum Grillen, Garen oder Backen von Speisen auf einem Grillrost oder dergleichen, insbesondere zur Verwendung im Freien, an dem der Zusatzbrenner anordenbar ist.

Grills und Gasgrills zum Garen von Grillgut resp. Speisen weisen zumindest einen Grillkörper mit einem Grillrost oder dergleichen zur Auflage des Grilliergutes sowie darunter befindlichen Mitteln zur Wärmeerzeugung, insbesondere glühende Holzkohle, Pellets, Heizelemente oder Gasbrenner auf. Je nach Ausstattung der Grillgeräte ist weiterhin ein Deckel oder eine Haube zum Verschluss des Grillkörpers vorgesehen. Bei einfachen Grills ist der Deckel vom Grillkörper getrennt und lose aufsetzbar. Bei vielen Grills ist der Deckel als Klappdeckel jedoch fest mit dem Grillkörper verbunden.

Aus der EP 0653917 B1 ist ein Grill zur Verwendung im Freien bekannt, bei dem zwischen einer Wärmequelle, insbesondere ein Gasbrennerring im unteren Bereich eines Grillbehälters und einem Rost zur Auflage des Grilliergutes eine Wandung eingesetzt ist, die Tropfen vom Grilliergut, insbesondere Fett oder Wasser auf die Wärmequelle verhindert und solche Tropfen oberhalb der Wärmequelle sammelnd auffängt. Die Tropfen werden in einen, unterhalb der Wärmequelle angeordneten Behälter geleitet. Hierbei sind diejenigen Bereiche der Wandung, die aufgrund ihrer Temperatur ein Verdampfen von Tropfen bewirken, in einem Winkel von 30° bis 70° zur Horizontalen geneigt angeordnet. Die Wandung ist in Form von Kugelschalenabschnitten gebildet. Sie beinhaltet Leitmittel, die die Tropfen in einen zentralen Aussparungsbereich der Wärmequelle und von da in einen unterhalb der Wärmequelle angeordneten Behälter leiten.

Bei einem Gasgrillgerät gemäss DE 202012100587 U ist unterhalb einer Brennereinheit eine Fettauffangeinrichtung angeordnet, die mehrere, nebeneinander befindliche Fettauffangschalen umfasst. Eine ähnliche Lösung ist in der US 4909137 A offenbart. Ebenso können anstelle von Schalen auch Ablaufwinkel (DE 08804071 U) oder Rinnen (DE 2020099014563 U) Verwendung finden.

Bei einem weiteren Grill dieser Art ist eine Einrichtung zur Wärmeleitung vorgesehen, die Garvorgänge bei direkter und indirekter Wärmeführung ermöglicht. Beim direkten Grillen wird die Wärme der Wärmequelle bei offenem Deckel direkt auf das zu garende Grilliergut geleitet, während beim indirekten Grillen die Wärme von der Wärmequelle mittels einer Wärmeleiteinrichtung seitlich um das Grilliergut geführt wird und erst durch Umlenkung unter dem geschlossenen Deckel auf das Grilliergut gelangt. Zum Wechsel zwischen direkter und indirekter Wärmeführung weist der Grillkörper einen Einsatz mit verschliessbaren Öffnungen auf. Mittels eines aussen am Grillkörper geführten Handgriffs, der mit dem Einsatz verbunden ist, kann die Offen- und Schliessstellung der Öffnungen erreicht werden. In der DE 202014004089 U wird zudem eine Brennerabdeckung aus V-förmig abgewinkelten Elementen für eine homogene Wärmeverteilung vorgeschlagen, die den gesamten Brennerraum überdeckt. Gemäss der US 2002/195096 A1 ist ein Grill mit verschiedenen Grilloptionen offenbart, bei dem eine Brennerabdeckung unterhalb des Grillrosts als Diffusor vorgesehen ist, was eine indirekte Erwärmung des Grillguts ermöglicht.

Aus der DE 60009979 T2 sind Gasbrenner bekannt, die die Gaszufuhr unterbrechen, sobald eine Zündflamme ein Flammschutz-Thermoelement bestreicht.

Gemäss der DE 102015109787 B4 kann ein Gasbrenner mit einer Kipp-Sicherheits-Baugruppe versehen sein, wobei ein Verbindungsrohr der Verbrennungsvorrichtung an einem Ende fluidmässig mit der Kipp-Sicherheits-Vorrichtung verbunden ist.

In der DE 202007019208 U1 ist eine Brennereinrichtung mit einem Gasbrenner für einen Heizkessel offenbart, dem eine halbautomatische Zünd- und Überwachungseinrichtung sowie ein Pilotbrenner zugeordnet ist. Der Pilotbrenner dient im Normalbetrieb zur Bereitstellung einer Zündflamme. Die Zünd- und Überwachungseinrichtung enthält eine elektronische Regelung und ist fluiddicht gekapselt zur Neuzündung des Pilotbrenners nach einer Unterbrechung des Normalbetriebs.

Zur Verbesserung der Grillleistung ist es auch bekannt, Brenner oder Heizstrahler seitlich zum Grillrost anzuordnen und/oder für variables Grillen können unterschiedliche Grillroste oder Grillkammern vorgesehen sein.

Der Erfindung liegt nun die Aufgabe zugrunde, einen Zusatzbrenner für einen Grill zum Grillen, Garen oder Backen von Speisen wie Fleisch, Fisch oder Gemüse auf einem Grillrost oder dergleichen, insbesondere zur Verwendung im Freien, zu schaffen, der eine bessere Performance beim Grillen ermöglicht und insbesondere auch direktes und indirektes Grillen gleichzeitig und energiesparend ermöglicht.

Die Aufgabe ist mit den kennzeichnenden Merkmalen des Patentanspruchs 1 gelöst.

Erfindungsgemäss weist ein Zusatzbrenner für einen Grill, Gasgrill, Elektrogrill, Pellet- oder Holzkohlengrill, eine Wärmequelle in Form eines Keramikbrenners auf, der an einer Basis des Grills befestigbar ist. Der Zusatzbrenner umfasst eine an der Oberseite offene Wanne, in der der Keramikbrenner angeordnet ist, einen, den Keramikbrenner überdeckenden Rost, sowie ein zwischen dem Rost und dem Keramikbrenner entnehmbar anordenbaren rostartigen Heat Diffusor. Dieser Heat Diffusor ermöglicht dadurch in Verbindung mit dem Rost, der höhenverstellbar ist, ein Grillieren mit unterschiedlichen Temperaturbereichen, eine gleichmässe Wärmverteilung auf dem darüberliegenden Rost, einen Schutz gegen den schädlichen Fettbrand und somit ein breites Anwendungsgebiet mit geringem Aufwand.

Eine weitere Aufgabe besteht darin, einen Grill mit mindestens einem erfindungsgemässen Zusatzbrenner auszugestalten.

Erfindungsgemäss ist der erfindungsgemässe Grill insbesondere ein Gasgrill, der eine Brennkammer, in der eine Brenneranordnung enthalten ist, wobei die Brennkammer mit einer klappbaren Haube versehen ist, die im geschlossenen Zustand den Grillrost abdeckt. Die Brennkammer ist auf einem Unterbau aufsitzend angeordnet ist und der Grill umfasst weiterhin als Arbeitsebene eine ebene Basis.

An der Basis ist mindestens ein Zusatzbrenner und/oder mindestens ein Ausziehtisch als Arbeitstisch anordenbar, wobei der Ausziehtisch und/oder der Zusatzbrenner Führungsschienen aufweist, die in Führungsbahnen der Basis, insbesondere in horizontaler Richtung, geführt und verriegelbar sind.

Der erfindungsgemässe Grill ist zum Grillen, Garen oder Backen von Speisen wie Fleisch, Fisch, Milchprodukten, Gemüse, Obst oder Backwaren auf einem Grillrost oder dergleichen, insbesondere zur Verwendung im Freien geeignet.

Bevorzugte Ausführungsformen sind in den abhängigen Ansprüchen offenbart.

Vorteilhaft ist die Fläche des Heat Diffusors im, den Keramikbrenner überdeckenden Bereich als geschlossenes Blech ausgebildet, während die seitlich anschliessenden Aussenbereiche zumindest an zwei parallelen Seiten mit Schlitzen zum Ablauf von Fett oder anderen Flüssigkeiten in die Wanne versehen sind. Der Heat Diffusor ist zusätzlich mit einem Neigungswinkel positioniert, damit auf den Rillen das Fett ablaufen kann

Der Zusatzbrenner weist Führungsschienen zur Anordnung und Befestigung in der Basis des Grills auf, die in Führungen der Basis geführt und verriegelbar sind. Der Zusatzbrenner kann so einfach in horizontaler Richtung in die Basis «eingeschoben» werden.

Der Rost des Zusatzbrenners ist in Bezug auf den Keramikbrenner in seiner Höhe verstellbar, um sowohl mit grosser als auch mit geringeren Hitze Anbraten oder Grillen zu können. Der Keramikbrenner ist regelbar.

Vorteilhaft kann der Zusatzbrenner in anderer Bauform auch als Gasbrenner ausgebildet sein. Er weist dabei ein Gehäuse mit einer darin angeordneten und herausnehmbaren Wanne, einen im Gehäuse bzw. in der Wanne zentral angeordneten und regelbaren Gasbrenner sowie einen höhenverstellbaren Ringrost auf.

Ein Grill mit einem solchen Zusatzbrenner weist eine Brennkammer auf, in der eine Brenneranordnung enthalten ist, wobei die Brennkammer mit einer klappbaren Haube versehen sein kann, die im geschlossenen Zustand den Grillrost abdeckt. Die Brennkammer ist auf einem Unterbau aufsitzend angeordnet. Weiterhin umfasst der Grill vorteilhaft als Arbeitsebene eine ebene Basis, und an der Basis ist mindestens ein Zusatzbrenner und/oder mindestens ein Ausziehtisch anordenbar. Der Ausziehtisch und/oder der Zusatzbrenner weist dabei Führungsschienen sowie eine intergrierte innere Führung in der Basis auf.

Beide Bauformen des Zusatzbrenners können auch zusammen, in einer Baueinheit kombiniert, an der Basis anordenbar sein. Ebenso kann auf jeder Seite der Brennkammer ein Zusatzbrenner angeordnet sein.

An der Basis kann auch ein Gasflaschenkit für eine grössere Gasflasche, zum Beispiel mit 11kg statt 8kg anordenbar sein.

Der Zusatzbrenner kann zudem ein offenes Gehäuse mit einer darin angeordneten und herausnehmbaren Wanne, einen zentral angeordneten und bevorzugt regelbaren Gasbrenner sowie einen höhenverstellbaren Ringrost umfassen.

Der Ringrost ist bevorzugt höhenverstellbar, in Bezug auf den genannten Gasbrenner.

Ein grosser Vorteil des höhenverstellbaren Rosts besteht darin, dass durch die Veränderung der Distanz zwischen Topf, Pfanne und Brenner zusätzlich weitere Einsatzmöglichkeiten bei der Zubereitung von Speisen bestehen. Die untere Position ist für hohe Hitze (scharf anbraten, WOK, etc.), die obere/höchste Position für niedrige Hitze (z. B. Sossen warmhalten) geeignet. In der Kombination mit dem regelbaren Gasbrenner ergibt sich ein sehr grosses Anwendungsspektrum. Bisher werden für ein solches Spektrum unterschiedlich grosse Brennerköpfe benötigt. Erfindungsgemäss wird dies in einem Brenner kombiniert.

Die Erfindung wird nachfolgend in einem Ausführungsbeispiel anhand einer Zeichnung näher beschrieben. In der Zeichnung zeigen die
- Fig. 1:: einen erfindungsgemässen Grill;
- Fig. 2:: einen Ausziehtisch des Grills nach Fig. 1;
- Fig. 3:: einen erfindungsgemässen Zusatzbrenner des Grills nach Fig. 1;
- Fig. 4:: den Zusatzbrenner nach Fig. 3 in Einzelteilen;
- Fig. 5:: eine zweite Ausführungsform eines Zusatzbrenners;
- Fig. 6:: den Zusatzbrenner nach Fig. 5 in Einzelteilen;
- Fig. 7:: den Grill nach Fig. 1 in einer weiteren Ausführungsform;
- Fig. 8:: ein Gasflaschenkit für den Grill nach Fig. 1 und
- Fig. 9:: ein Grillrost-Pizzastein-Kit für den Grill nach Fig. 1.

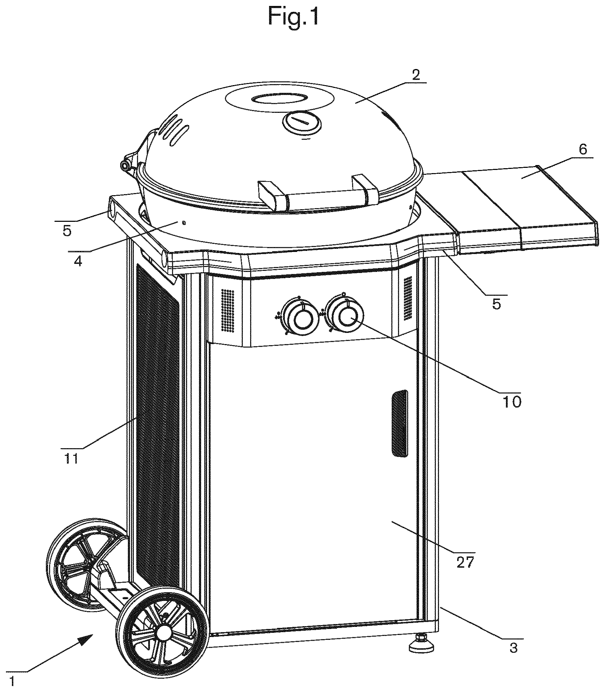

Ein erfindungsgemässer Grill, im Ausführungsbeispiel ein Gasgrill 1 (Fig. 1), weist eine halbkugelförmige Brennkammer 4 auf, in der eine Brenneranordnung angeordnet ist, wobei die Brennkammer 4 mit einer klappbaren, gewölbten Haube 2 versehen ist, die im geschlossenen Zustand einen Grillrost abdeckt. Die Haube 2 ist mittels eines Scharniers an der Rückwand der Brennkammer 4 angeschlagen. Für das Auf- und Zuklappen ist die Haube 2 mit einem Handgriff versehen.

Zwischen Brennern der Brenneranordnung und dem Grillrost ist noch ein Flammenschutz positioniert, der dazu dient, die Gefahr resp. die Auswirkungen von Fettflammenbrand o. a. zu reduzieren.

Die Brennkammer 4 ist auf einem rollfähigen, quaderförmigen Unterbau 3, der im Wesentlichen aus Metall besteht, aufsitzend angeordnet, wobei eine der Seitenwände 11 als Tür 27 ausgebildet ist. Oberhalb dieser Tür 27 ist eine Bedieneinheit 10 mit mindestens einem Drehgriff angeordnet (Fig. 1). Im Beispiel ist der Drehgriff mit einem Leuchtring in Form farbiger LED's in der Frontwand umgeben. Dieser Leuchtring leuchtet auf, sobald ein, nicht dargestelltes Gasventil geöffnet und die Zündeinrichtung des Brenners aktiv ist, insbesondere bereits vor dem ausströmen von Gas. Die Zündeinrichtung kann dazu zum Beispiel am Ventil oder mit einem separaten "Startknopf" gekoppelt sein.

Der Unterbau 3 dient in bekannter Weise der Unterbringung von Gasflasche, Armaturen, Grillwerkzeugen, Geschirr etc.

Anstelle metallischer Seitenwände 11 kann der Unterbau 3 zum Beispiel auch mit einer Textilverkleidung ausgestattet sein.

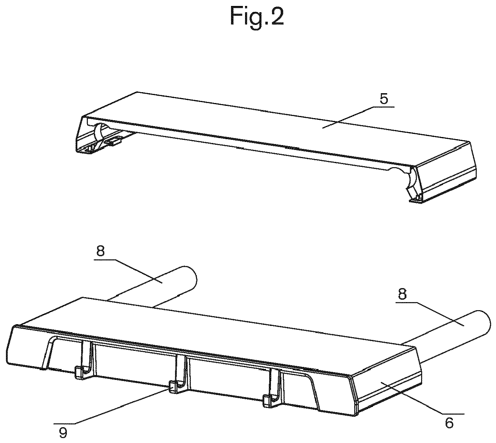

Unterhalb des Handgriffs der Haube 2 ist als Arbeitsebene eine ebene Basis 5 aus Metall oder Aluminium angeordnet, an der links und/oder rechts von der Brennkammer 4 ein massiver Ausziehtisch 6 angeordnet ist (Fig. 1). Dieser Ausziehtisch 6 ist mit Führungsschienen 8 sowie einer intergrierten inneren Führung in der Basis 5 geführt (Fig. 2) und kann so einfach horizontal ausgezogen und eingeschoben werden. Die Führungsschienen 8 sind im Beispiel als Rohrprofile ausgebildet. Zwischenstücke 7 können bei ausgeschobenen Tisch eingeklipst werden kann. Soll der Ausziehtisch 6 eingeschoben werden, werden die Zwischenstücke 7 ausgeklipst und können mittels Magneten unter dem Ausziehtisch 6 hängen.

Der Ausziehtisch 6 ist an der Basis 5 in nicht dargestellter Weise verriegelbar. An der äusseren Stirnfläche des Ausziehtischs 6 sind vorteilhaft Haken 9 zum Anhängen von Grillbesteck, Handschuhen etc. angeordnet.

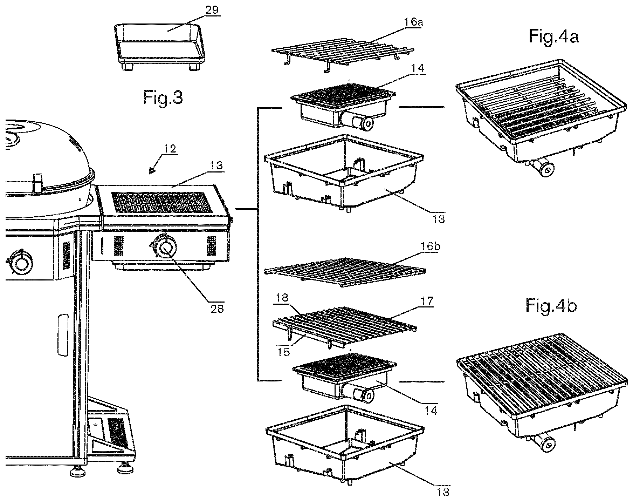

Anstelle des Ausziehtischs 6 kann auch ein erfindungsgemässer Zusatzbrenner 12 in Form eines kastenförmigen Heat Diffusor Kits 12 (Fig. 3) an der Basis 5 angeordnet werden.

Die Befestigung des Zusatzbrenners 12 an der Basis 5 erfolgt ebenfalls mittels fixer Führungsschienen 8 an der Basis 5.

Ein Zusatzbrenner 12 in Form eines Blazining Zone Kits hingegen umfasst eine offene Wanne 13, in der ein Keramikbrenner 14 angeordnet ist, der mit einem, in der Höhe über dem Keramikbrenner 14 verstellbaren, Rost 16a überdeckt ist. Zwischen einem Rost 16b und dem Keramikbrenner 14 ist ein rostartiger Heat Diffusor 15 anordenbar, dessen Fläche im Bereich des Keramikbrenners 14 als Blech 17 (Tamerblech) ausgebildet und somit geschlossen ist. Die seitlich anschliessenden Aussenbereiche sind mit Schlitzen 18 versehen (Fig. 4).

Der Rost 16a ist in der Höhe verstellbar. Rost 16b liegt fix auf dem Rahmen 13 auf. Der Rost 16a ist vom Niveau tiefer als 16b.

Der Zusatzbrenner 12 als Blazing Zone Kit ermöglicht einerseits ein scharfes grillen bei hohen Temperaturen von 600°C-900°C mit perfekter Kruste am Fleisch. Der Heat Diffusor 15 wird dazu entnommen (Fig. 4a).

Andererseits ermöglicht der Zusatzbrenner 12 mit eingelegtem Heat Diffusor 15 ein reguläres grillen bei mittleren Temperaturen von 200°C-350°C und ist insbesondere für fetthaltigeres Fleisch und sensibleres Grillgut wie zum Beispiel Geflügel, Fisch oder Gemüse geeignet.

Das den Keramikbrenner 14 überdeckende Blech 15, 17, 18 (Fig. 4b) verhindert dabei Fettbrand und verteilt, in Verbindung mit den Schlitzen 18, die Hitze am Rost 16 b. Fett oder andere Flüssigkeiten fliessen durch die Schlitze 18 in die Wanne, ohne auf den Keramikbrenner 14 zu gelangen und werden in der Wanne 13 gesammelt. Der Heat Tamer ist zusätzlich mit einem Neigungswinkel positioniert, damit auf den Rillen das Fett ablaufen kann.

Heat Diffusor 15 und Rost 16a und 16b können wiederum einzeln manuell oder in einem Geschirrspüler gereinigt werden.

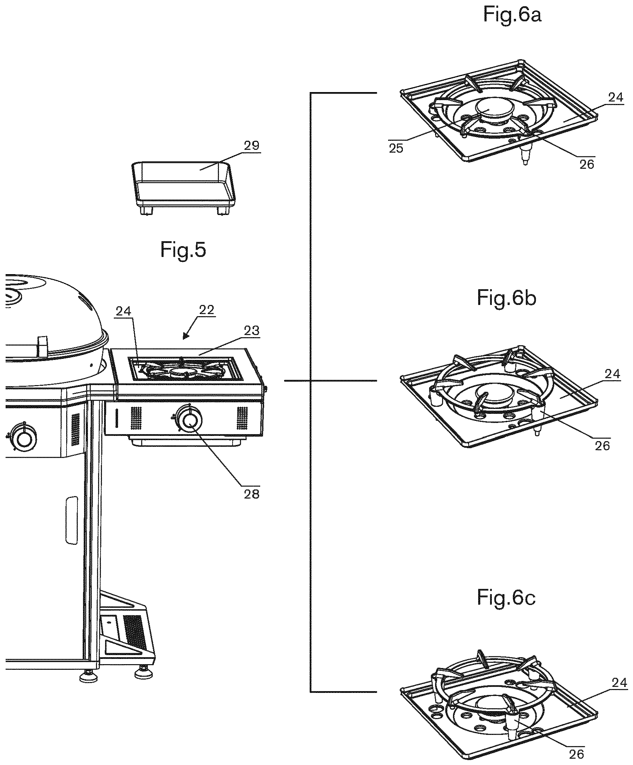

Anstelle oder ergänzend zum Zusatzbrenner 12 in Form eines Blazing Zone Kits ist an der Basis 5 ein anderer Zusatzbrenner 22 in Form eines Cooking Zone Kits (Fig. 5) anordenbar, der wie das Blazing Zone Kit an der Basis 5 befestigbar ist.

Ein Cooking Zone Kit umfasst ein Gehäuse 23 mit einer darin angeordneten und herausnehmbaren Wanne 24, einen zentral angeordneten Gasbrenner 25 sowie einen höhenverstellbaren Ringrost 26 aus Gusseisen. Der Gasbrenner 25 wird mittels eines Drehreglers 28 bedient, der an der Front des Gehäuses 23 angeordnet ist (Fig. 5).

Für grosse Hitze zum schnellen scharfen anbraten von Fleisch, Fisch oder Gemüse ist der Ringrost 26 tief, d. h. nahe der Wanne 24 angeordnet (Fig. 6a). Für eine mittlere Hitze (Anbraten von Fleisch, Fisch oder Schmoren) ist der Ringrost 26 auf eine mittlere Höhe einstellbar (Fig. 6b). Für eine tiefere Hitze (zum Beispiel Kochen von Saucen oder Suppen, Schmor- und Reisgerichten) ist der Ringrost 26 in einer hohen Position (Fig. 6c) einstellbar.

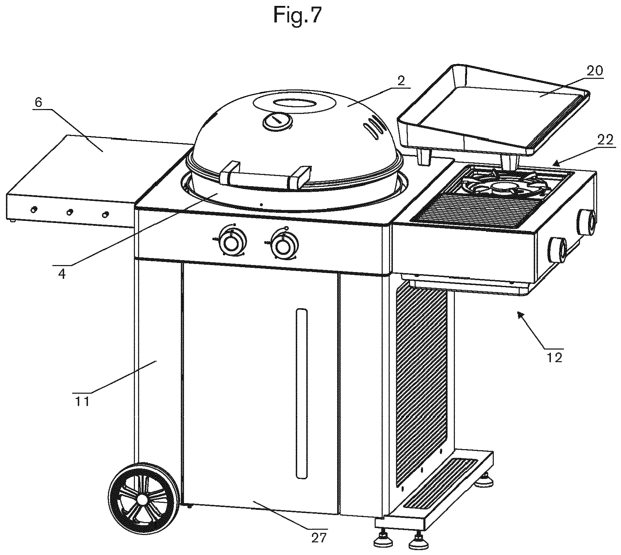

Blazingzone Kit 12 und Cooking Zone Kit 22 können beispielsweise auch zu einer Einheit kombiniert und an der Basis 5 anordenbar sein (Fig. 7). Diese Einheit kann zusätzlich noch von einer Plancha 20 überdeckt sein, die in Hitzezonen teilbar ist, die getrennt regelbar sind.

Ebenso kann anstelle des Zusatzbrenners 12, 22 auch ein zweiter Ausziehtisch 6 an der Basis 5 arretiert werden.

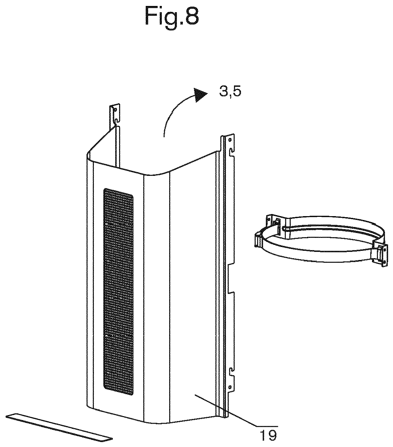

Weiterhin kann an der Basis 5 ebenfalls ein Gasflaschenkit 19 (Fig. 8) für eine grössere Gasflasche, z. B. für 11 kg Gas, anordenbar sein.

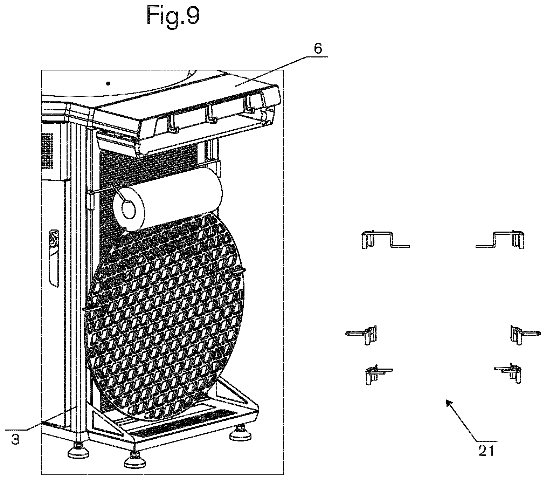

Zusätzlich könnte der Grill auch mit einem Grillrost-Pizzastein-Kit 21 (Fig. 9) ausgestattet werden, welches bei Nichtgebrauch an einer Seitenwand 11 des Unterbaus 3 gelagert werden kann.

Anstelle einer Brenneranordnung eines Gasgrills können auch Elektroheizstäbe als Wärmequelle eingesetzt werden, bei entsprechender konstruktiver Anpassung auch Holzkohle, Brikettes, Pellets oder andere brennbare, organische Stoffe.

### Liste der Bezugszeichen

- 1: Gasgrill
- 2: Haube
- 3: Unterbau
- 4: Brennkammer
- 5: Basis
- 6: Ausziehtisch
- 7: Zwischenstück
- 8: Führungsschiene
- 9: Haken
- 10: Bedieneinheit/Drehgriff
- 11: Seitenwand
- 12: Zusatzbrenner/ Blazing Zone Kit
- 13: Wanne
- 14: Keramikbrenner
- 15: Heat Diffusor
- 16: Rost
- 17: Blech/ Diffusor
- 18: Schlitz
- 19: Gasflaschenkit
- 20: Plancha
- 21: Grillrost-Pizzasteinkit
- 22: Zusatzbrenner/ Cooking Zone Kit
- 23: Gehäuse
- 24: Wanne
- 25: Gasbrenner
- 26: Ringrost
- 27: Tür
- 28: Drehregler

## Patentansprüche

1. Zusatzbrenner für einen Grill, Gasgrill, Elektrogrill, Pellet- oder Holzkohlengrill, der eine Wärmequelle in Form eines Keramikbrenners (14) aufweist und der an einer Basis (5) des Grills befestigbar ist, **dadurch gekennzeichnet, dass** der Zusatzbrenner (12) eine offene Wanne (13), in der der Keramikbrenner (14) angeordnet ist, der mit einem Rost (16 a und b) überdeckt ist, umfasst, wobei zwischen dem Rost (16b) und dem Keramikbrenner (14) ein rostartiger Heat Diffusor (15) entnehmbar anordenbar ist.

2. Zusatzbrenner nach Anspruch 1, **dadurch gekennzeichnet, dass** die Fläche des Heat Tamers (15) im Bereich des Keramikbrenners (14) als Blech (17) ausgebildet ist, und dass die seitlich anschliessenden Aussenbereiche mit Schlitzen (18) versehen sind.

3. Zusatzbrenner nach Anspruch 1 oder 2, **dadurch gekennzeichnet, dass** der Zusatzbrenner (12, 22) Führungsschienen (8) zur Anordnung und Befestigung in der Basis (5) des Grills aufweist.

4. Zusatzbrenner nach einem der Ansprüche 1 bis 3, **dadurch gekennzeichnet, dass** der Rost (16a) höhenverstellbar, in Bezug auf den Keramikbrenner (14), ist, und/oder dass der Keramikbrenner (14) regelbar ist.

5. Zusatzbrenner nach einem der Ansprüche 1 bis 4, **dadurch gekennzeichnet, dass** der Grill eine Brennkammer (4) aufweist, in der eine Brenneranordnung enthalten ist, wobei die Brennkammer (4) mit einer klappbaren Haube (2) versehen ist, die im geschlossenen Zustand den Grillrost abdeckt, wobei die Brennkammer 4 ist auf einem Unterbau (3) aufsitzend angeordnet ist, und weiterhin als Arbeitsebene eine ebene Basis (5) umfasst, und dass an der Basis (5) mindestens ein Zusatzbrenner (12, 22) und/oder mindestens ein Ausziehtisch (6) anordenbar ist, wobei der Ausziehtisch (6) und/oder der Zusatzbrenner (12, 22) Führungsschienen (8) sowie eine intergrierte innere Führung in der Basis (5) aufweist.

6. Grill zum Grillen, Garen oder Backen von Speisen auf einem Grillrost, insbesondere zur Verwendung im Freien, der eine Brennkammer (4), in der eine Brenneranordnung enthalten ist, wobei die Brennkammer (4) mit einer klappbaren Haube (2) versehen ist, die im geschlossenen Zustand den Grillrost abdeckt, wobei die Brennkammer 4 ist auf einem Unterbau (3) aufsitzend angeordnet ist, und weiterhin als Arbeitsebene eine ebene Basis (5) umfasst, **dadurch gekennzeichnet, dass** an der Basis (5) mindestens ein Zusatzbrenner (12, 22) und/oder mindestens ein Ausziehtisch (6) anordenbar ist, wobei der Ausziehtisch (6) und/oder der Zusatzbrenner (12, 22) Führungsschienen (8) sowie eine intergrierte innere Führung in der Basis (5) aufweist.

7. Grill nach einem der Ansprüche 1 bis 6, **dadurch gekennzeichnet, dass** der Zusatzbrenner (12) eine offene Wanne (13), in der ein bevorzugt regelbarer Keramikbrenner (14) angeordnet ist, der mit einem höhenverstellbaren Rost (16a) überdeckt ist, umfasst, wobei zwischen dem Rost (16b) und dem Keramikbrenner (14) ein rostartiger Heat Diffusor (15) entnehmbar anordenbar ist.

8. Grill nach einem der Ansprüche 1 bis 7, **dadurch gekennzeichnet, dass** die Fläche des Heat Tamers (15) im Bereich des Keramikbrenners (14) als Blech (17) ausgebildet ist, und dass die seitlich anschliessenden Aussenbereiche mit Schlitzen (18) versehen sind.

9. Grill nach einem der Ansprüche 1 bis 8, **dadurch gekennzeichnet, dass** der Zusatzbrenner (22) ein Gehäuse (23) mit einer darin angeordneten und herausnehmbaren Wanne (24), einen zentral angeordneten und bevorzugt regelbaren Gasbrenner (25) sowie einen höhenverstellbaren Ringrost (26) umfasst.

10. Grill nach einem der Ansprüche 1 bis 9, **dadurch gekennzeichnet, dass** die Zusatzbrenner (12, 22) in einer Einheit kombiniert an der Basis (5) anordenbar sind.

11. Grill nach einem der Ansprüche 1 bis 10, **dadurch gekennzeichnet, dass** an der Basis (5) ein Gasflaschenkit (19) anordenbar ist.

12. Grill nach einem der Ansprüche 1 bis 10, **dadurch gekennzeichnet, dass** der Zusatzbrenner (22) ein offenes Gehäuse (23) mit einer darin angeordneten und herausnehmbaren Wanne (24), einen zentral angeordneten und bevorzugt regelbaren Gasbrenner (25) sowie einen höhenverstellbaren Ringrost (26) umfasst.

13. Grill nach einem der Ansprüche 1 bis 10, **dadurch gekennzeichnet, dass** der Ringrost (26), in Bezug auf den Gasbrenner (25), höhenverstellbar ist.
